(19) Europäisches Patentamt
European Patent Office
Office européen des brevets

(11) Publication number: **0 259 151 B1**

(12) # EUROPEAN PATENT SPECIFICATION

(45) Date of publication of patent specification: **15.12.93** (51) Int. Cl.[5]: **G06K 19/08**, G11B 7/24

(21) Application number: **87307752.3**

(22) Date of filing: **02.09.87**

(54) **Optical card and process for producing it.**

(30) Priority: **03.09.86 JP 205870/86**
**04.11.86 JP 260800/86**
**13.07.87 JP 172917/87**
**13.07.87 JP 172918/87**

(43) Date of publication of application:
**09.03.88 Bulletin 88/10**

(45) Publication of the grant of the patent:
**15.12.93 Bulletin 93/50**

(84) Designated Contracting States:
**DE FR GB IT NL**

(56) References cited:
**EP-A- 0 083 991**

**PATENT ABSTRACTS OF JAPAN, vol. 10, no. 338 (P-516)[2394], 15th November 1986; & JP-A-61 139 952**

**PATENT ABSTRACTS OF JAPAN, vol. 11, no. 142 (P-573)[2589], 9th May 1987; & JP-A-61 278 055**

(73) Proprietor: **CANON KABUSHIKI KAISHA**
**30-2, 3-chome, Shimomaruko,**
**Ohta-ku**
**Tokyo(JP)**

(72) Inventor: **Miura, Kyo**
**774-5-8-5, Kuden-cho**
**Sakae-ku**
**Yokohama-shi Kanagawa-ken(JP)**
Inventor: **Kawade, Hisaaki**
**6-29, Mizuhiki 2-chome**
**Atsugi-shi Kanagawa-ken(JP)**
Inventor: **Ikoma, Keiko**
**143-23-2, Sachigaoka**
**Asahi-ku**
**Yokohama-shi Kanagawa-ken(JP)**
Inventor: **Oguchi, Yoshihiro**
**16-1-201, Ida Sanmai-cho**
**Nakahara-ku**
**Kawasaki-shi Kanagawa-ken(JP)**
Inventor: **Miyagawa, Masashi**
**13-11-303, Eda Higashi 3-chome**
**Midori-ku**
**Yokohama-shi Kanagawa-ken(JP)**
Inventor: **Hiraoka, Mizuho**
**1350-8 Suenaga**
**Takatsu-ku**
**Kawasaki-shi Kanagawa-ken(JP)**

**EP 0 259 151 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Yoshino, Hitoshi**
**15-19, Meguro 3-chome**
**Meguro-ku**
**Tokyo(JP)**
Inventor: **Nagano, Kazumi**
**2291, Takakura**
**Fujisawa-shi Kanagawa-ken(JP)**

(74) Representative: **Beresford, Keith Denis Lewis et al**
**BERESFORD & Co.**
**2-5 Warwick Court**
**High Holborn**
**London WC1R 5DJ (GB)**

## Description

### BACKGROUND OF THE INVENTION

### Field of the Invention

The present invention relates to an optical card, and, particularly, to a cardlike information recording carrier for optically recording and reproducing information.

### Related Background Art

In recent years, with the advance of information technology, various information recording carriers and optical information recording and reproducing apparatus for optically recording and reproducing information, including optical disc, optical card, optical tape, etc., have been proposed as a means for dealing with a great variety of information with high efficiency. The above information recording carriers include those which can detect the binary-coded information by converting to the change of strength a change of reflectance, a change of strength of reflected light which is accompanied with a change of surface shape corresponding to the presence or absence of pits (holes), or a change of polarized light surface by magnetooptic effect. These information recording carriers are characterized by having advantages such that they can achieve high recording density and can perform non-contact recording and reproducing, and therefore can enjoy a long life.

Research and development also have been made extensively in recent years in respect of cardlike information recording carriers (hereinafter referred to as optical cards) having good portability and having a large capacity for their size.

The information recording carriers for optically recording and reproducing information will be described below by making reference to optical cards.

Referring to how to optically record and reproduce information, there is performed, for example, magneto-optical recording in which the magnetizing direction is reversed by an energy beam, recording performed by forming concavo-convex pits, or recording by utilizing differences in optical reflectance. Usually, however, widely used are recording carriers utilizing differences in optical reflectance as they have a high S/N ratio and can be produced with ease.

As the recording carriers utilizing differences in optical reflectance, there have been proposed, for example, cards having a recording layer comprising silver particles dispersed in a gelatin matrix. The writing of information in this recording layer is carried out by irradiating a laser beam on the recording layer to form recording pits.

On the other hand, there have been proposed so-called heat mode recording elements, in which recording is carried out by irradiating an energy beam such as a laser beam on a recording layer in the form of a spot and changing in part the state of the recording layer. These recording layers may comprise metallic thin films comprising tellurium, bismuth, etc., organic thin films comprising polystyrene, nitrocellulose, etc., dye thin films comprising cyanines, or tellurium low oxidized product films utilizing phase transition. These recording elements do not require any development processing or the like after writing of information, and are called DRAW (direct read after write) media that can "read immediately after writing", by which high density recording can be performed and additional writing can be also performed.

An example of a DRAW optical recording medium is described in European Patent Application EP-A2-0083991. This medium comprises a light transmissive substrate and a recording layer of e.g. thin film bismuth or tellurium. The recording layer is protected by a water-vapour resistant coating layer of a porphyrin type compound such as copper phthalocyanine.

Fig. 3 is a typical plan view showing a recording format of a conventional DRAW type optical card.

In Fig. 3, an optical card 1 which is the recording carrier is provided on it with a recording area 2, and the recording area 2 is formed by a track 3 arranged in plurality. In each track 3, further formed are a start bit and a stop bit, and each track 3 has an information capacity of about several thousand bits. Each of the tracks 3 is also partitioned by a reference line 5 (hereinafter "R-line"). Arrow A indicates the direction in which the optical card 1 moves at the time of reproducing.

Fig. 4 is a schematical contitutional view showing an optical card reproducing process.

In Fig. 4, the optical card 1 is movable in the direction of arrow A by means of a rotating mechanism 6. The information recorded on the optical card 1 is read by an optical head 11 for each track 3 and reproduced. First, light from a light source 7 such as a semiconductor laser is condensed by a lens system 8, and irradiates the track 3 on which the information has been recorded. An image of the track 3 irradiated

is formed on a sensor 10 through means of an image formation optical system 9, and an electrical signal corresponding to the information recorded on the above track 3 is output from the sensor 10.

Once the read-out on the above track 3 is completed, the optical card moves in the direction of arrow A or the optical head 11 moves in the direction in which the tracks 3 are arranged (the direction of arrow C), so that the information on the subsequent track 3 is read in a similar manner.

To gain access to an arbitrary track 3 on the optical card 1, the optical head 11 is moved in the direction of arrow C. The optical head 11 counts the R-line 5 to select a track 3 to which a target track 3 intended to be read belongs, and stops when it reaches the target track 3. Subsequently, the optical card 1 is moved in the direction of arrow A by means of the rotating mechanism 6 to perform read-out of information on the target track 3.

In this manner, in the conventional information recording carrier such as the optical card 1, information can be optically read or reproduced by utilizing the light irradiated from the light source 7 provided on the optical head of the optical recording and reproducing apparatus.

During reproduction of the recorded information, tracking is performed and the optical card 1 is moved reciprocally, in the direction of arrow A, by means of the rotating mechanism 6. At the end of each tracking traverse the optical card 1 is decelerated to a stop and then accelerated in the reverse direction. During this time the recordable part of the optical card can be exposed to an excessive dose of read-out light, and although the level of irradiation is much lower than that used during normal recording, undesirable writing can result. This in turn can make detection of the tracking signal difficult and thus tracking errors can occur after repeated read-out operations.

## SUMMARY OF THE INVENTION

The present invention has been made in order to solve the above problem. The present invention is intended to provide an optical card that can prevent the undesirable writing which may occur for read-out light when the movement of the optical card is arrested and reversed.

According to one aspect of the present invention, there is provided an optical card comprising a transparent substrate having an optical recording layer and a region at which, during use of the card, relative movement of read-out light is stopped, characterised in that the region is non-recordable and has substantially the same reflectance as the optical recording layer.

According to another aspect of the present invention, there is provided a method for reproducing information recorded in an optical card having a substrate and a recording layer, said method comprising the step of irradiating read-out light onto said optical card while effecting relative reciprocating movement between said optical card and said read-out light, characterised in that stopping of the relative movement of said optical card and the read-out light accompanying the reverse of the movement direction is effected when said read-out light is irradiated onto an unrecordable region of said card which has substantially the same reflectance as said recording layer.

Since the optical card of the present invention comprises a non-recordable region as aforesaid the reflectance may not be changed by the irradiation of energy beam of read-out light, even then the optical card has stopped, and therefore no tracking error may occur even if the optical card is reciprocated repeatedly.

Further, the relationship between the position of the optical card and that of the read-out light is relative. Therefore, needless to say, the same effects as in the above can be obtained even when it is the movement of the read-out light that is stopped.

## BRIEF DESCRIPTION OF THE DRAWINGS

Fig. 1 is a schematic cross-sectional view showing an embodiment of the optical card according to the present invention;

Fig. 2 is an explanatory view showing the unrecordable part provided on an optical recording layer;

Fig. 3 is a schematic plan view showing a recording format of an optical card in the prior art;

Fig. 4 is a schematic constitutional view showing an optical card reproducing process in the prior art;

Fig. 5 is a schematic constitutional view of a laminating step in the conventional process for producing an optical card;

Fig. 6 is a schematic constitutional view showing an example of a laminating step in a preferred process for producing an optical card; and

Fig. 7 is a schematic view showing another example for the laminating step.

DETAILED DESCRIPTION OF THE PREFERRED EMBODIMENTS

The optical card according to the present invention will be described below on the basis of a specific example shown in the drawing. Fig. 1 is a cross-sectional view showing an embodiment of the optical card according to the present invention.

In Fig. 1, the optical card comprises i) an optical recording element 27 comprising a transparent substrate 21 having track grooves 26 thereon, and an optical recording layer 22 provided on the track grooves, and further comprising marginal portions 25 (Fig. 2) corresponding to the unrecordable part provided at both ends (not shown in Fig. 1) of the track grooves, and ii) an opaque card substrate 24 provided in such a manner that it may be contiguous to the optical recording element 27 with interposition of an adhesive layer 23.

If necessary, the optical card may be provided on its top surface or back surface with a magnetic recording layer, an IC memory, an engraved image, a photograph, a character, a mark, an embossed character called an imprint. Such measures taken can make it possible to deal with various reproducing systems in one card, and also can more effectively prevent forgery.

The transparent substrate 21 having the track grooves 26 may preferably include those causing less difficulties in the optical recording and reproducing, and also preferably include those having thermoplastic properties as having good formability to form the track grooves. For example, there can be used acrylic resins, polyester resins, polycarbonate resins, vinyl resins, polyimide resins, polyacetal resins, polyolefin resins, polyamide resins, cellulose derivatives, etc.

In the case the substrate comprises a thermoplastic resin, the track grooves can be formed on the substrate by using a process in which a stamper pattern is heat-transferred according to injection molding or heat press molding at a temperature higher than the melting point of the resin, or a process in which a stamper pattern is photo-transferred according to a method comprising coating a photo-setting resin composition on the substrate, on which a stamper pattern is adhered, followed by irradiation with ultraviolet rays or the like to allow said photo-setting resin composition to cure.

In the case of the heat transfer process, the track grooves and the transparent substrate are formed into an integral body. In contrast thereto, in the case of the photo-transfer process, the track grooves are formed not integrally with, but in adhesion to, the transparent substrate.

Alternatively, apart from the stamper type transfer process, the track grooves can be formed on the substrate by forming a resist film on a transparent substrate having a light-transmissive thin film with desired thickness capable of being etched, exposing it to light through a photomask having the pattern corresponding to the track grooves, followed by developing to form a resist pattern, and etching the above light-transmissive thin film with use of the resist pattern as a mask.

As the opaque card substrate 24, any kind of materials usable as ordinary card materials can be used. Specifically, there can be used polyvinyl chloride, a vinyl chloride/vinyl acetate copolymer, polyvinylidene chloride, an acrylic type polymer such as polymethyl methacrylate, polystyrene, polyvinyl butyral, acetyl cellulose, a styrene/butadiene copolymer, polyethylene, polypropylene, polycarbonate, etc. In some instances, there can be also used metallic sheets made of iron, stainless steel, aluminum, tin, copper, zinc, etc., synthetic paper, paper and so forth. Besides, a laminate of the materials as above can be also used. Such an opaque card substrate 24 may be optionally subjected to pretreatment for improving the adhesion, such as corona discharge treatment, plasma treatment and primer treatment.

In the case the wavelength of an energy beam for reproducing is 650 nm or more, particularly 700 to 900 nm, the optical recording layer 22 may preferably have a great difference between the reflectance in the pit which is the recording part and that in the non-recording part. Also, the smaller the energy necessary for producing a change of the reflectance by irradiation of an energy beam for recording, the more preferable. Still also, preferred are those in which the reflectance in the recording part (pits or the like) and non-recording part may not be changed by the energy beam for producing. For example, oxides of Te, Sb, Mo, Ge, V, Sn or the like and compounds such as Te-Sn, TeOx-Ge may cause phase transition by irradiation of the energy beam to change the reflectance. It is also possible to use composite materials of metals such as Te-$CH_4$, Te-$CS_2$, Te-styrene, Sn-$SO_2$, GeS-Sn, SnS-S with organic compounds or inorganic sulfides; or multi-layer films such as $SiO_2$/Ti/$SiO_2$/Al film. It is further possible to use those obtained by dispersing particles of metals such as silver in a thermoplastic resin such as nitrocellulose, polystyrene and polyethylene; or

those obtained by aggregating metallic particles on the surface of this thermoplastic resin. There can be also used chalcogen or color developing type $MoO_3$-Cu, $MoO_3$-Sn-Cu, etc., and, in some instances, can be also used a multi-layer product of a foam formation type organic thin film with a metallic thin film.

An organic thin film whose properties are capable of being optically changed by an energy beam can be also used, comprising, for example, dyes such as anthraquinone derivatives, particularly those having an indanthrene skeleton, dioxazine compounds and derivatives thereof, triphenodithiazine compounds, phenanthrene derivatives, cyanine compounds, merocyanine compounds, pyrylium compounds, xanthene compounds, thriphenylmethane compounds, croconium dyes and crocones. These enables continuous production according to solution coating, and therefore are preferable for the present invention.

The unrecordable part in the present invention should have substantially the same reflectance with that of the optical recording layer (provided that the reflectance of about ± 25 % is tolerable), and is a part at which any optical change (in refractive index, reflectance, absorption, etc.) or physical change (e.g. deformation by heat) may not substantially be caused by the energy of read-out light when the recorded information is reproduced.

In the following, a process for producing the optical card according to the present invention will be described.

First, the track grooves 26 are formed by hot pressing or the like on the transparent substrate 21 made of polymethyl methacrylate resin or polycarbonate resin. Subsequently, an unrecordable part that has substantially the same reflectance with that of the optical recording layer and also may not undergo any change at all by the energy of read-out light is formed at the marginal portions 25 shown in Fig. 2. Thereafter, the optical recording layer is formed on the part of the track grooves 28 or the track grooves 28 including the marginal portions 25. If the optical recording layer 22 is formed by coating a solution obtained by dissolving, for example, a cyanine as an organic dye in a solvent, followed by drying, the unrecordable part can be formed by previously coating on the marginal portions 25 a solution obtained by dissolving in a solvent a phthalocyanine having substantially the same reflectance, for example, iron phthalocyanine, nickel phthalocyanine, copper phthalocyanine, a sodium salt of dicyanocobalt phthalocyanine, cobalt phthalocyanine, etc. or a mixture obtained by dispersing a small amount of resin in a solvent followed by kneading.

For the unrecordable part, there can be also used a thin film containing a diimonium salt or aminium salt. Used as the diimonium salt or aminium salt are the compound represented by General Foumula (I) shown below.

General Foumula (I):

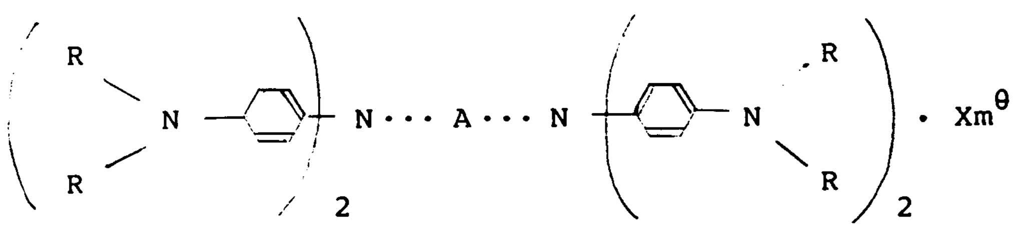

In the formula, R represents a lower alkyl group; $X^{\ominus}$ represents an acid anion; m represents an integer of 0, 1 or 2; and A represents

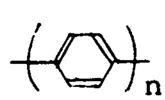

(n is 1 or 2) or

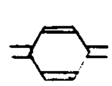

when the above m is 2.

Specific examples thereof may include the following compounds I and II :

| | R | $X^{\ominus}$ | m | A |
|---|---|---|---|---|
| Compound I | nBu | $ClO_4^{\ominus}$ | 2 | 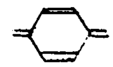 |
| Compound II | nBu | $ClO_4^{\ominus}$ | 1 | 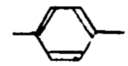 |

The thin film containing these diimonium salts or aminium salts have a high value to reflectance of 10 to 12 %. Thus, since the reflectance of the unrecordable part containing the diimonium salt or aminium salt is as high as 10 to 12 %, this can be used in all of recording media (reflectance : 8 to 16 %) generally used, and can have high stability against the decrease in reflectance due to the undesirable writing which may occur owing to read-out light when the optical card is reversed to stop as it reversingly moves.

The unrecordable part may be also formed by using a film coated with an unrecordable material (herein also meant to be a material incapable of being recorded. The unrecordable material may include, for example, dithiolato complexes of metals, diimonium salts, ammonium salts, etc. It may desirably be coated in thickness of 50 to 300 nm (500 to 3,000 Å) preferably 80 to 150 nm (800 to 1,500 Å).

The film to be coated with the unrecordable material may be 10 to 500 $\mu$m in thickness, and there can be used, for example, polyethylene terephthalate, polyimide, polycarbonate, polymethyl methacrylate, etc.

The film coated with the unrecordable material can be advantageously used when a recording material coating solution for forming the optical recording layer and an unrecordable material coating solution for forming the unrecordable part are readily soluble in each other.

If the coating solutions readily soluble in each other is used in an instance where an optical card is produced by coating on the transparent substrate the material incapable of being optically recorded, and, after drying, coating thereon the recording material to provide the optical recording layer, there is a possibility that the unrecordable material is dissolved in the solvent when the recording material is coated, even though the coating of the recording material is carried out after drying of the unrecordable material. For this reason, the unrecordable material may be intermingled with the recording material and exuded to the recording part, and damage of an unrecordable material layer may occur in the unrecordable part. Accordingly, the unrecordable part comprising the film coated with the unrecordable material may be formed by adhering the above film on the transparent support, whereby it may not occur that the recording material and the above unrecordable material are intermingled with each other. Thus, there can be prevented a lowering or unevenness of the reflectance of the unrecordable part, that may occur owing to intermingling of the above materials, and the undesirable writing which may occur owing to read-out light when an optical card is reversed to stop as it moves at the time of tracking. Also, there can be no exudation of the unrecordable material to the recording part, and it is made possible to perform better and stable writing, reproducing tracking, and autofocusing.

As coating methods, there can be used dip coating, spray coating, spinner coating, bar coating, blade coating, roll coating, curtain coating and so forth.

The marginal portions 25 and the optical recording layer 22 each may be about 50 to 200 nm (500 to 2,000 Å), preferably about 100 nm (1,000 Å), in film thickness. In particular, from a viewpoint of the recording sensitivity, they may preferably be of smaller thickness, and, from a view point of the S/N ratio in reproducing, of somewhat greater thickness. Optimum film thickness may vary depending on the type of dyes.

The optical recording element wherein part of the above optical recording layer has been made incapable of being recorded, may be overlapped in such a manner that the optical recording layer 22 may be contiguous to the opaque card substrate 24, between which the adhesive layer 23 which is thermally adhesive is interposed, followed by contact bonding with use of a heat-fixing roll heated to about 90 to 150 °C. An optical card can thus be produced.

In the production of this optical card, the heat contact bonding may preferably be carried out by overlapping the opaque card substrate on the transparent substrate having the track grooves on its surface, with interposition of a thermoplastic adhesive sheet having been beforehand provided on one side thereof with the optical recording layer, and in such a manner that the optical recording layer may be in contact with the track groove faces, whereby an optical card having good recording and reproducing performances can be produced.

As shown in Fig. 5, in a laminating step in the conventional process for producing an optical card, the optical card has been produced by forming the optical recording layer 22 on the transparent substrate 21 having the track grooves 26, followed by heat contact bonding of the opaque card substrate with interposition of the adhesive layer 23.

In the above-mentioned conventional process for producing an optical card, the optical recording layer 22 is formed on the transparent substrate 21 having the track grooves 26. However, it has been difficult to control the film thickness of the optical recording layer 22, since there is irregularity of the groove in the track groove portion in order to perform tracking in accordance with the phase difference of a laser beam. It has been made clear that the sensitivity of the optical recording layer 22 strongly depends on the film thickness, and, in particular, the film thickness is considered important.

In the instance where the organic recording material such as dyes are used for the optical recording layer 22, a solvent solution of the dye is coated and dried to form the optical recording layer 22. Therefore, in view of the problem of solvent resistance in respect of the transparent substrate 21 and the track grooves 26, limitation may sometimes be set on the type of the solvent or the concentration of the solution used for forming the optical recording layer 22.

Moreover, as the solvent solution of the dye is coated and dried to form the optical recording layer 22, the solvent, depending on its type, may remain even after the drying to cause poor adhesion between the adhesive layer 23 and the optical recording layer 22 in the laminating step, bringing about a problem such that the recording and reproducing performances of the optical recording layer are worsened.

Now, an optical card having solved the above problems and having good recording and reproducing performances can be produced by a process for producing an optical card comprising a transparent substrate having a track groove on its surface, an optical recording layer provided on said track groove, and an opaque card substrate provided in such a manner that it may be contiguous to said optical recording layer, wherein;

(1) a transparent substrate having a track groove, a thermoplastic adhesive sheet provided on one side thereof with an optical recording layer, and an opaque card substrate are overlapped in such a manner that the optical recording layer may be in contact with the track groove, followed by heat contact bonding; or

(2) a transparent substrate having a track groove, and an opaque card substrate fitted with a thermoplastic adhesive sheet provided on one side thereof with an optical recording layer are overlapped in such a manner that the optical recording layer may be in contact with the track groove, followed by heat contact bonding.

Fig. 6 is a schematic constitutional view of the process for producing an optical card according to the above step (1). The optical card is produced through a laminating step in which a transparent substrate 21 having track grooves 26, a thermoplastic adhesive sheet 29 provided on one side thereof with an optical recording layer 22, and an opaque card substrate 24 are overlapped in such a manner that the optical recording layer 22 may be in contact with the track grooves 26, followed by heat contact bonding.

Fig. 7 is a schematical constitutional view showing the process for producing an optical card according to the above step (2). The optical card is produced through a laminating step in which a transparent substrate 21 having track grooves 26, and an opaque card substrate 24 fitted with a thermoplastic adhesive sheet 29′ provided on one side thereof with an optical recording layer 22 are overlapped in such a manner that the optical recording layer 22 may be in contact with the track grooves 26, followed by heat contact bonding.

In the process for forming the optical recording layer, when, for example, the aforesaid solvent solution of the dye is coated, the solvent solution has so low viscosity that the solution may tend to stay in the track grooves by coating it on the track grooves in the conventional manner, making it difficult to carry out uniform film formation. However, as shown in Fig. 6 or Fig. 7, the solvent solution of the dye may be coated on the thermoplastic adhesive sheet 29 or the opaque card substrate 24 fitted with the thermoplastic adhesive sheet 29′, whereby it becomes possible to carry out uniform film formation giving constant film thickness.

In this instance, polymethyl methacrylate resins or polycarbonate resins have been widely used conventionally for the transparent substrate having the track grooves formed by the heat transfer process, so that there could not be used the solvent liable to affect the substrate when the solvent solution of the dye is coated on its surface, and it has been also difficult to increase the solubility of the dye. However, as a result that the solvent solution is coated on the thermoplastic adhesive sheet, the solvent can be selected in a wider range.

The thermoplastic adhesive sheet 29 may include those made of, for example an ethylene/vinyl acetate copolymer and modified resins thereof, and ethylene/ethyl methacrylate copolymer, a vinyl acetate/acrylate

copolymer, etc.

The opaque card substrate 24 fitted with the thermoplastic adhesive sheet 29′ may be used by previously laminating the thermoplastic adhesive sheet 29 on the opaque card substrate. In this instance, the thermoplastic adhesive sheet 29′ and the opaque card substrate 24 can be laminated according to a process in which the thermoplastic adhesive sheet is heat sealed under heating, a process in which the lamination is effected through means of an additional adhesive, or the like process. Accordingly, the thermoplastic adhesive sheet 29′ may in certain cases have double-layer structure, but can be used without any difficulties.

The thermoplastic adhesive sheet 29 or 29′ may preferably be about 20 to 100 µm in thickness.

Subsequently, the above thermoplastic adhesive sheet and the opaque card substrate, or the opaque card substrate fitted with the thermoplastic adhesive sheet, and the transparent substrate may be subjected to contact bonding with use of a heat-fixing roll heated to about 90 °C to 150 °C while retaining the above-mentioned layer structure, according to the laminating step as shown in Fig. 6 or Fig. 7, whereby the optical card can be produced.

If necessary, in the DRAW type optical card produced in the manner as described above, it is also possible to provide on the transparent substrate 21 a hard coat for preventing the card from being scratched. In order to increase the fastness to light, it is also possible to form an ultraviolet absorption film on the transparent substrate 21. Also, in an instance where the transparent substrate itself comprises a resin containing an ultraviolet absorbent, the fastness to light and durability can be increased by only providing the hard coat, thus giving preferable constitution.

The following is to illustrate how the information is written in the optical recording layer mentioned above and how the information written in the optical card is read.

The information can be written in the recording layer by condensing and irradiating an energy beam of 300 to 1,000 nm in wavelength through a lens or the like to form recording pits. Here, the energy strength may preferably 0.1 to 100 mW; the pulse width, 5 nsec to 500 msec; and the beam size, 0.5 to 10 µm. The energy beam to be irradiated may include laser beams from a semiconductor laser, an argon laser, a helium/neon laser, a krypton laser, etc., which are preferable for detecting the track grooves.

On the other hand, the information written in the optical card according to the present invention can be read by condensing through a lens or the like an energy beam having energy low enough to cause no change of properties of the recording layer, irradiating the condensed beam from the side of the transparent substrate of the optical card, and detecting the presence or absence of the pits while relating the strength of reflected light with the phase change.

The present invention will be described below in greater detail by Examples. However, the present invention is by no means limited by these.

Example 1

Track grooves were formed by hot pressing on a transparent substrate comprising a polymethyl methacrylate film (produced by Nitto Jushi K.K.) of 54 mm wide, 85.6 mm long and 0.3 mm thick and containing an ultraviolet absorbent. There were given track groove pitch of 10 µm, track groove width of 3 µm and track groove depth of 0.2 µm.

Next, on both end portions (the portions corresponding to the numeral 25 in Fig. 2) on the surface of this track grooves, a substance obtained by dispersing copper phthalocyanine in PMMA resin was coated with use of a roll coater to give a width of 10 mm, and, after drying, a solution obtained by dissolving a dye of the following formula (II) in 2-butanone was spinner-coated on the track groove part 28 to form a recording layer of about 900 Å in thickness.

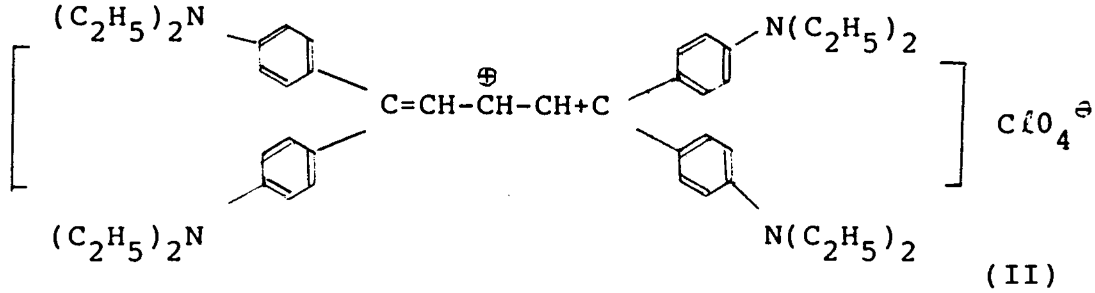

(II)

On the other hand, a card substrate comprising a white and hard vinyl chloride film of 0.4 mm thick was overlapped in such a manner that it may be contiguous to the optical recording layer of the above optical recording element with interposition of a thermal adhesive (a vinyl chloride/vinyl acetate/maleic acid resin), followed by lamination by contact bonding with use of a heat roll having a surface temperature of 120 ° C. Thereafter, the surface of the transparent substrate was treated with a silicone type surface hardening agent to produce an optical card.

The reflectance of the optical card produced was measured from the transparent substrate side to find that it was 15 % on the optical recording layer part, and 12 % on the unrecordable part.

The optical card thus obtained was used without causing the undesirable writing owing to read-out light even when the optical card stopped as it reversingly moved, and there occurred no tracking error even in a 30,000 time reciprocating test.

Example 2

Track grooves were formed by hot pressing on a transparent substrate comprising polycarbonate (Panlite AD-5503, produced by Teijin Chemical Ltd.) of 0.3 mm thick. The track grooves were made to have the shape entirely same as that in Example 1.

On the marginal portions,a solution obtained by dissolving a sodium salt of dicyanocobalt phthalocyanine in a DMF/benzene (1:1) mixed solvent containing 5 % vinyl acetate was coated with use of a roll coater, and, after drying, the dye solution used in Example 1 was spinner-coated to form a recording layer of about 110 nm (1,100 Å) in thickness.

On the other hand, a card substrate comprising a white polycarbonate film of 0.4 mm thick was overlapped in such a manner that it may be contiguous to the optical recording layer of the above optical recording element with interposition of a thermal adhesive (Placcel H-7, produced by Daicel Chemical Industries, Ltd.), followed by lamination by contact bonding with use of a heat roll having a surface temperature of 120 ° C.

The reflectance of the optical card produced was measured from the transparent substrate side to find that it was 15 % on the optical recording layer part, and 13 % on the unrecordable part.

The optical card thus obtained was used without causing the undesirable writing owing to read-out light even when the optical card stopped as it reversingly moved, and there occurred no tracking error even in a 30,000 time reciprocating test.

Example 3

Track grooves were formed by hot pressing on a transparent substrate comprising a polymethyl methacrylate film (produced by Nitto Jushi K.K.) of 54 mm wide, 85.6 mm long and 0.4 mm thick. There were given track groove pitch of 10 µm, track groove width of 3 µm and track groove depth of 0.2 µm.

Next, on both end portions (the portions corresponding to the numeral 25 in Fig. 2) on the surface of this track grooves, a solution obtained by dissolving the dye of the compound I in diacetone alcohol was coated with use of a roll coater,

Compound I:

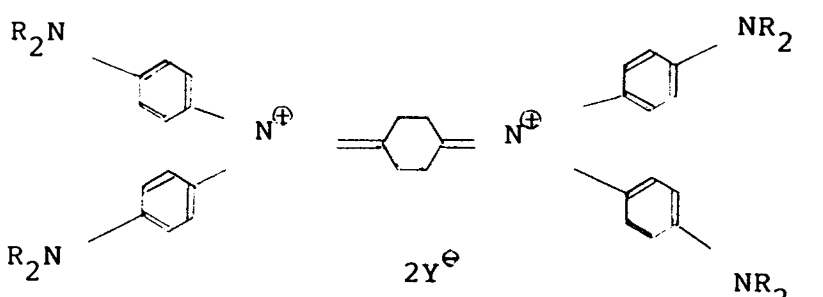

R=nBu, $Y^{\ominus}=Cl O_4^{\ominus}$

and after drying, a solution obtained by dissolving a dye of the following formula (III) in diacetone alcohol was spinner-coated on the track groove part to form a recording layer of about 100 nm (1,000 Å) in thickness. The unrecordable part was about 100 nm (1,000 Å) in thickness.

Formula (III):

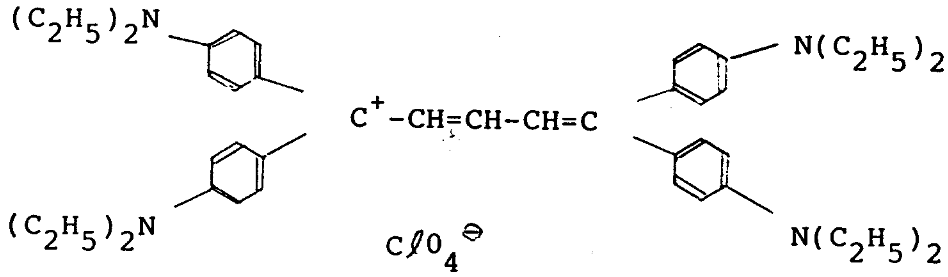

On the other hand, a card substrate comprising a white and hard vinyl chloride film of 0.4 mm thick was overlapped in such a manner that it may be contiguous to the optical recording layer of the above optical recording element with interposition of a thermal adhesive (a vinyl chloride/vinyl acetate/maleic acid resin), followed by lamination by contact bonding with use of a heat roll having a surface temperature of 100 ° C to produce an optical card. The optical recording layer part has the reflectance of 13 %. The unrecordable part had the reflectance of 11 %.

The optical card thus obtained was used without causing the undesirable writing owing to read-out light even when the optical card stopped as it reversingly moved, and there occurred no tracking error even in a 100,000 time reciprocating test.

Example 4

Track grooves were formed by hot pressing on a transparent substrate comprising polycarbonate (Panlite AD-5503, produced by Teijin Chemical Ltd.) of 0.4 mm thick. The track grooves were made to have the shape entirely same as that in Example 3.

On the unrecordable part, a solution obtained by dissolving the dye of the above compound II in diacetone alcohol was coated with use of a roll coater, and, after drying, the solution of the dye represented by formula (III) as used in Example 3 was spinner-coated to form a recording layer of 100 nm (1,000 Å) in thickness. The unrecordable part was about 90 nm (900 Å) in thickness.

On the other hand, an opaque card substrate comprising a white polycarbonate film of 0.4 mm thick was overlapped in such a manner that it may be contiguous to the optical recording layer of the above optical recording element with interposition of a thermal adhesive (Placcel H-7, produced by Daicel Chemical Industries, Ltd.), followed by lamination by contact bonding with use of a heat roll having a surface temperature of 100 ° C to produce an optical card. The optical recording layer part had the reflectance of 12 %. The unrecordable part had the reflectance of 10 %.

The optical card thus obtained was used without causing the undesirable writing owing to read-out light even when the optical card stopped as it reversingly moved, and there occurred no tracking error even in a 100,000 time reciprocating test.

Example 5

Track grooves were formed by hot pressing on a transparent substrate comprising a polymethyl methacralate film (produced by Nitto Jushi K.K.) of 54 mm wide, 85.6 mm long and 0.4 mm thick. There were given track groove pitch of 10 μm, track groove width of 3 μm and track groove depth of 0.2 μm.

Next, on this track grooves, a solution obtained by dissolving the dye of the above formula (III) in diacetone alcohol was coated with used of a bar coater to form an optical recording layer of about 100 nm (1,000 Å) in thickness.

On the other hand, on a polyethylene terephthalate film (Mylar, produced by Du Pont Co.), the solution of the dye of the above compound I was coated to give a thickness of about 100 nm (1,000 Å).

On the unrecordable part of the above transparent substrate, the film coated with the above unrecordable material was overlapped in such a manner that it may be in contact with the optical recording layer, on which an opaque card substrate was overlapped with interposition of a thermal adhesive (a vinyl chloride/vinyl acetate/maleic acid resin), followed by lamination by contact bonding with use of a heat roll having a surface temperature of 100 ° C. As the opaque card substrate, used was a white and hard vinyl

chloride film of 0.3 mm thick. Thereafter, the surface of the transparent substrate was treated with a silicone type surface hardening agent to produce an optical card. The reflectance of the optical recording layer part and unrecordable part had 14 % and 12%, respectively.

The optical card thus obtained was used without causing the undesirable writing owing to read-out light even when the optical card stopped as it reversingly moved, and there occurred no tracking error even in a 100,000 time reciprocating test.

Example 6

Track grooves were formed by hot pressing on a transparent substrate comprising polycarbonate (Panlite AD-5503, produced by Teijin Chemical Ltd.) of 0.4 mm thick. The track grooves were made to have the shape entirely same as that in example 5.

Next, on this track grooves, a solution obtained by dissolving the dye of the above formula (III) in 2-butanone was spinner-coated to give a thickness of about 90 nm (900 Å).

On the other hand, the dye of the above compound I was coated on a polyethylene terephthalate film (Lumilar, produced by Toray INductries, Inc.) with use of a bar coater.

On the unrecordable part of the above transparent substrate, the above film was overlapped in such a manner that it may be in contact with the optical recording layer, on which an opaque card substrate was overlapped with interposition of a thermal adhesive (Placcel H-7, produced by Daicel Chemical Industries, Ltd.), followed by lamination by contact bonding with use of a heat roll having a surface temperature of 120 °C.

As the opaque card substrate, used was a white polycarbonate film of 0.4 mm thick.

The reflectance of the optical recording layer part and unrecordable part had 14% and 12%, respectively.

The optical card thus obtained was used without causing the undesirable writing owing to read-out light even when the optical card stopped as it reversingly moved, and there occurred no tracking error even in a 100,000 time reciprocating test.

Example 7

A transparent substrate comprising a polymethyl methacrylate film (Clarex produced by Nitto Jushi K.K.) of 0.4 mm thick was subjected to injection molding to form track grooves of 12 μm in pitch, 0.2 μm in depth and 3 μm in groove width.

On both end portions of the grooves on this transparent substrate provided with the track grooves, a substance obtained by dispersing copper phthalocyanine in PMMA resin was coated by use of a roll coater to give a width of 10 mm each as the unrecordable part (corresponding to the marginal portion in Fig. 2), followed by drying.

On the other hand, on an opaque card substrate comprising a white and hard vinyl chloride film of 0.3 mm thick, on which a thermoplastic adhesive sheet (Placcel H-7, produced by Daicel Chemical Industries, Ltd.) was formed with a thickness of 100 μm, a solution obtained by dissolving the dye of the above formula (II) in a mixed solvent of acetone/diacetone alcohol/isopropanol in concentration of 5 % by weight was spinner-coated to form an optical recording layer of about 90 nm (900 Å) in thickness.

Subsequently, the above transparent substrate having the track grooves and the opaque card substrate fitted with the thermoplastic adhesive sheet having the optical recording layer were overlapped in such a manner that the optical recording layer may be in contact with the track grooves, followed by lamination by contact bonding with use of a heat roll having a surface temperature of 120 °C to produce an optical card.

The reflectance of the optical card produced was measured from the transparent substrate side to find that it as 15 % on the optical recording layer part, and 12 % on the unrecordable part.

The optical card thus obtained was used without causing the endesirable writing owing to read-out light even when the optical card stopped as it reversingly moved, and there occurred no tracking error even in a 30,000 time reciprocating test.

Example 8

A transparent substrate comprising polycarbonate (Panlite AD-5503, produced by Teijin Chemical Ltd.) of 0.4 mm thick was processed by hot pressing to form track grooves of 12 μm in pitch, 0.2 μm in depth and 3 μm in groove width.

Subsequently, on both end portions of the grooves on this transparent substrate provided with the track grooves, a 3 % diacetone alcohol coating solution containing the dye of the above compound I was coated to give a width of 10 mm each as the unrecordable part, to form the unrecordable part of about 100 nm (1,000 Å) in thickness.

On the other hand, on a thermoplastic adhesive sheet (evaflex 7500-EXP80, produced by Mitsui Du Pont Polychemical Co.) of 50 µm thick, a solution of the dye of formula (II) was coated by use of a bar coater to form an optical recording layer with film formation to give a thickness of about 100 nm (1,000 Å).

Next, white polycarbonate (Toughlon, produced by Idemitsu Petrochemical Co., Ltd) of 0.4 mm used as an opaque card substrate was overlapped in such a manner that the above optical recording layer may be in contact with the track grooves, followed by contact bonding in the form of three layer lamination with use of a heat roll having a surface temperature of 120 °C to produce an optical card.

The reflectance of the optical card produced was measured from the transparent substrate side to find that it was 17% on the optical recording layer part, and 14% on the unrecordable part.

The optical card thus obtained was used without causing the undesirable writing owing to read-out light even when the optical card stopped as it reversingly moved, and there occurred no tracking error even in a 30,000 time reciprocating test.

Comparative Examples 1 and 2

Examples 1 and 3 were repeated to produce optical cards, except that in Examples 1 and 3 the optical recording layers were used as such without providing the unrecordable part on the ends of the track grooves at the marginal portions. These are respectively designated as Comparative examples 1 and 2.

The optical cards thus obtained were never used without causing the undesirable writing owing to read-out light when the optical card stopped as it reversingly moved, and there occurred tracking errors in both cards when the read-out was repeated about 10 times.

**Claims**

1. An optical card comprising a transparent substrate (21) having an optical recording layer (22) and a region (25) at which, during use of the card, relative movement of read-out light is stopped, characterised in that the region (25) is non-recordable and has substantially the same reflectance as the optical recording layer (22).

2. The optical card of claim 1, wherein said unrecordable region (25) contains at least a phthalocyanine.

3. The optical card of claim 2, wherein said phthalocyanine is copper phthalocyanine.

4. The optical card of claim 1, wherein said unrecordable region (25) contains at least a compound represented by General Formula (I) shown below:
General Formula (I):

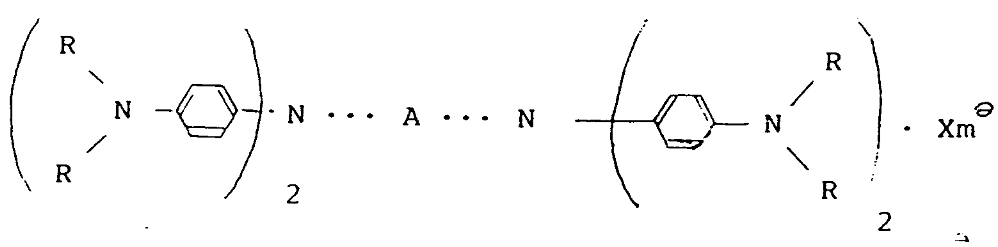

wherein R represents a lower alkyl group, $X^{\ominus}$ represents an anion; m represents an integer of 0, 1 or 2; and A represents

(n is 1 or 2) or

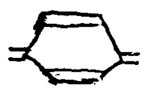

when the above m is 2.

5. The optical card of claim 4, wherein the compound represented by General Formula (I) is the following compounds:

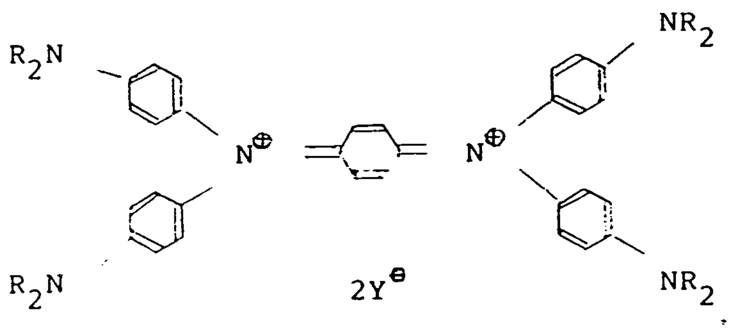

wherein R is n-$C_4H_9$, and $Y^{\theta}$ is $C10_4^{\theta}$.

6. The optical card of any one of claims 1, 2, 3, 4 and 5, wherein said unrecordable region (25) is formed by coating.

7. The optical card of any preceding claim, wherein said unrecordable region (25) comprises a film coated with an unrecordable material.

8. The optical card of claim 7, wherein said unrecordable material is a phthalocyanine.

9. The optical card of claim 7, wherein said unrecordable material is the compound represented by General Formula (I) having the same definition as the above.

10. The optical card of any preceding claim, wherein said unrecordable region (25) has a reflectance of less than ±25% of the reflectance of said optical recording layer (22).

11. The optical card of any preceding claim, wherein said optical recording layer (22) is contiguous to an opaque card substrate (24) with interposition of an adhesive layer (23).

12. The optical card of any preceding claim, wherein a transparent substrate (21) having track grooves (26), a thermoplastic adhesive sheet (29, Fig.6) provided on one side thereof with an optical recording layer (22), and an opaque card substrate are overlapped in such a manner that the optical recording layer (22) can contact the track grooves (26), followed by heat contact bonding.

13. The optical card of any of claims 1 to 11, wherein a transparent substrate (21) having track grooves (26), and an opaque card substrate (24) carrying a thermoplastic adhesive sheet (29', Fig.7) provided on one side thereof with an optical recording layer (22) are overlapped in such a manner that the optical recording layer (22) may be in contact with the track grooves (26), followed by heat contact bonding.

14. The optical card of claim 12 or 13, wherein said thermoplastic adhesive sheet (29 or 29') is 20 to 100 $\mu$m in thickness.

15. The optical card of claim 12 or 13, wherein said heat contact bonding is carried out at 90 °C to 150 °C.

16. The optical card of any preceding claim, wherein said transparent substrate (21) is provided thereon with a hard protective coating layer.

17. The optical card of any preceding claim, wherein said transparent substrate (21) is provided thereon with an ultraviolet absorptive film.

18. The optical card of any preceding claim, wherein the optical recording layer (22,28) has an end (25) at which the unrecordable region (25) is provided.

19. The optical card of any preceding claim, wherein the optical recording layer (22,28) has opposite ends (25) at each of which an unrecordable region (25) is provided.

20. The optical card of any preceding claim, wherein tracking grooves (22) extend into the or each unrecordable region (25).

21. The optical card of any preceding claim, wherein the unrecordable region is arranged to undergo substantially no optical or physical change on exposure to read-out light during stoppage of the card as its direction of movement in a card reader reverses.

22. A method for reproducing information recorded in an optical card having a substrate (21) and a recording layer (22), said method comprising the step of irradiating read-out light onto said optical card while effecting relative reciprocating movement between said optical card and said read-out light, characterised in that stopping of the relative movement of said optical card and the read-out light accompanying the reverse of the movement direction is effected when said read-out light is irradiated onto an unrecordable region (25) of said card which has substantially the same reflectance as said recording layer (22).

23. A method of claim 22, wherein said unrecordable region (25) has a reflectance of less than +25% of the reflectance of said recording layer (22).

24. The method of claim 22, wherein said recording layer (22) is bonded to an opaque card backing (24) by an adhesive layer (23).

25. The method of any one of claims 22, 23 and 24, wherein said substrate (21) has a hard protective coating layer.

26. The method of any one of claims 22 to 25, wherein said substrate (21) has an ultraviolet absorptive film coating layer.

**Patentansprüche**

1. Optische Karte, umfassend einen transparenten Träger (21) mit einer optischen Aufzeichnungsschicht (22) und einem Bereich (25) auf dem, während der Verwendung der Karte, eine relative Bewegung des Ausleselichts zum Stillstand kommt, **dadurch gekennzeichnet, daß** der Bereich (25) nicht beschriftbar ist und im wesentlichen das gleiche Reflexionsvermögen wie die optische Aufzeichnungsschicht (22) aufweist.

2. Optische Karte nach Anspruch 1, **dadurch gekennzeichnet, daß** der nicht-beschriftbare Bereich (25) mindestens ein Phtalocyanin enthält.

3. Optische Karte nach Anspruch 2, **dadurch gekennzeichnet, daß** das Phtalocyanin Kupferphtalocyanin ist.

4. Optische Karte nach Anspruch 1, **dadurch gekennzeichnet, daß** der nicht-beschriftbare Bereich (25) mindestens eine Verbindung enthält, dargestellt durch die nachstehend gezeigte allgemeine Formel (I): Allgemeine Formel (I):

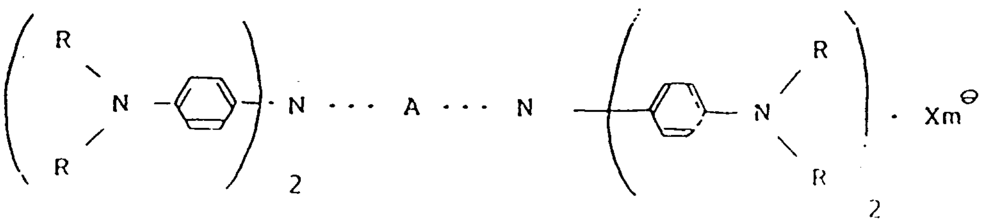

wobei R eine Niedrigalkylgruppe und $X^{\ominus}$ ein Anion darstellt; m stellt eine Ganzzahl von 0, 1 oder 2 dar, und A stellt

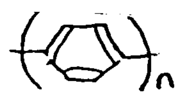

(n ist 1 oder 2) oder

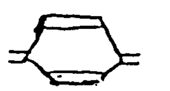

dar, wenn das vorstehende m 2 beträgt.

**5.** Optische Karte nach Anspruch 4, **dadurch gekennzeichnet, daß** die Verbindung, die durch die allgemeine Formel (I) dargestellt wird, aus folgenden Verbindungen besteht:

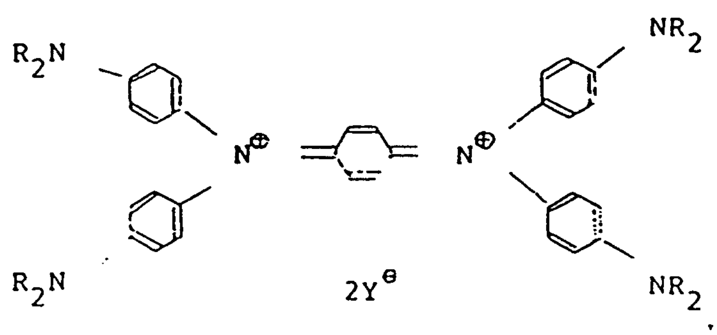

wobei R $n\text{-}C_4H_9$ und $Y^{\ominus}$ $C10_4^{\ominus}$ darstellt.

**6.** Optische Karte nach einem der vorstehenden Ansprüche 1, 2, 3, 4 und 5, **dadurch gekennzeichnet, daß** der nicht-beschriftbare Bereich (25) mittels Beschichtens gebildet wird.

**7.** Optische Karte nach einem der vorstehenden Ansprüche, **dadurch gekennzeichnet, daß** der nicht-beschriftbare Bereich (25) einen mit einem nicht-beschriftbaren Material beschichteten Film umfaßt.

**8.** Optische Karte nach Anspruch 7, **dadurch gekennzeichnet, daß** das nicht-beschriftbare Material Phtalocyanin ist.

**9.** Optische Karte nach Anspruch 7, **dadurch gekennzeichnet, daß** das nicht-beschriftbare Material aus der Verbindung besteht, die durch die allgemeine Formel (I), mit der gleichen Definition wie vorstehend, dargestellt wird.

**10.** Optische Karte nach einem der vorstehenden Ansprüche, **dadurch gekennzeichnet, daß** der nicht-beschriftbare Bereich (25) ein Reflexionsvermögen innerhalb von ±25% des Reflexionsvermögens der

optischen Aufzeichnungsschicht (22) aufweist.

**11.** Optische Karte nach einem der vorstehenden Ansprüche, **dadurch gekennzeichnet, daß** die optische Aufzeichnungsschicht (22) auf einem undurchsichtigen Kartenträger (24) mit einer dazwischen angeordneten Haftschicht (23) folgt.

**12.** Optische Karte nach einem der vorstehenden Ansprüche, **dadurch gekennzeichnet, daß** ein transparente Träger (21) mit Spurrillen (26), eine thermoplastische Haftschicht (29, Fig. 6), auf einer ihrer Seiten mit einer optischen Aufzeichnungsschicht (22) versehen, und ein undurchsichtiger Kartenträger auf solch eine Weise (teilweise) übereinanderliegen, daß die optische Aufzeichnungsschicht (22) mit den Spurrillen (26) in Kontakt steht, gefolgt von einem Wärmekontakthaften.

**13.** Optische Karte nach einem der Ansprüche 1 bis 11, **dadurch gekennzeichnet, da**ß ein transparenter Träger (21) mit Spurrillen (26), und ein undurchsichtigen Kartenträger (24), der eine thermoplastische Haftschicht (29', Fig. 7) trägt, die auf einer ihrer Seiten mit einer optischen Aufzeichnungsschicht (22) versehen ist, auf solch eine Weise (teilweise) übereinanderliegen, daß die optische Aufzeichnungsschicht (22) in Kontakt mit den Spurrillen (26) stehen kann, gefolgt von einem Wärmekontakthaften.

**14.** Optische Karte nach Anspruch 12 oder Anspruch 13, **dadurch gekennzeichnet, daß** die thermoplastische Haftschicht (29 oder 29') eine Dicke von 20 bis 100 $\mu$m aufweist.

**15.** Optische Karte nach Anspruch 12 oder 13, **dadurch gekennzeichnet, daß** das Wärmekontakthaften bei 90 °C bis 150 °C ausgeführt wird.

**16.** Optische Karte nach einem der vorstehenden Ansprüche, **dadurch gekennzeichnet, daß** der transparente Träger (21) mit einer harten Schutzschicht versehen ist.

**17.** Optische Karte nach einem der vorstehenden Ansprüche, **dadurch gekennzeichnet, daß** der transparente Träger (21) mit einem Ultraviolett-Absorptionsfilm versehen ist.

**18.** Optische Karte nach einem der vorstehenden Ansprüche, **dadurch gekennzeichnet, daß** die optische Aufzeichnungsschicht (22, 28) ein Ende (25) aufweist, an dem der nicht-beschriftbare Bereich (25) zur Verfügung gestellt wird.

**19.** Optische Karte nach einem der vorstehenden Ansprüche, **dadurch gekennzeichnet, daß** die optische Aufzeichnungsschicht (22, 28) entgegengesetzte Enden aufweist, wobei an jedem davon ein nicht-beschriftbarer Bereich (25) zur Verfügung gestellt wird.

**20.** Optische Karte nach einem der vorstehenden Ansprüche, **dadurch gekennzeichnet, daß** die Spurrillen (22) sich in den oder in jeden nicht-beschriftbaren Bereich (25) erstrecken.

**21.** Optische Karte nach einem der vorstehenden Ansprüche, **dadurch gekennzeichnet, daß** der nicht-beschriftbare Bereich angeordnet wird, um im wesentlichen keine optische oder physikalische Veränderung bei der Belichtung mit dem Ausleselicht während des Stillstandes der Karte, wenn sich ihre Bewegungsrichtung in einem Kartenleser umkehrt, zu erfahren.

**22.** Verfahren zur Wiedergabe von in einer optischen Karte mit einem Träger (21) und einer Aufzeichnungsschicht (22) gepeicherter Information, wobei das Verfahren den Schritt der Bestrahlung der optischen Karte mit einem Ausleselicht, während eine relative Hin- und Herbewegung zwischen der optischen Karte und dem Ausleselicht erfolgt, umfaßt, und **dadurch gekennzeichnet, daß** der mit der Umkehrung der Bewegungsrichtung einhergehende Stillstand der relativen Bewegung der optischen Karte und des Ausleselichts erfolgt, wenn das Ausleselicht den nicht-beschriftbaren Bereich (25) der Karte, der im wesentlichen das gleiche Reflexionsvermögen wie die Aufzeichnungsschicht (22) aufweist, bestrahlt.

**23.** Verfahren nach Anspruch 22, **dadurch gekennzeichnet, daß** der nicht-beschriftbare Bereich (25) ein Reflexionsvermögen innerhalb von ±25% des Reflexionsvermögens der Aufzeichnungsschicht (22) aufweist.

**24.** Verfahren nach Anspruch 22, **dadurch gekennzeichnet, daß** die Aufzeichnungsschicht (22) mittels einer Haftschicht (23) an einer undurchsichtigen Kartenrückschicht (24) haftet.

**25.** Verfahren nach einem der Ansprüche 22, 23 und 24, **dadurch gekennzeichnet, daß** der Träger (21) eine harte Schutzschicht aufweist.

**26.** Verfahren nach einem der Ansprüche 22 bis 25, **dadurch gekennzeichnet, daß** der Träger (21) eine Schicht aus einem Ultraviolett-Absorptionsfilm aufweist.

## Revendications

**1.** Carte optique comportant un substrat transparent (21) ayant une couche (22) d'enregistrement optique et une région (25) à laquelle, durant l'utilisation de la carte, un mouvement relatif d'une lumière d'extraction est arrêté, caractérisée en ce que la région (25) n'est pas enregistrable et possède sensiblement la même réflectance que la couche (22) d'enregistrement optique.

**2.** Carte optique selon la revendication 1, dans laquelle ladite région non enregistrable (25) contient au moins une phtalocyanine.

**3.** Carte optique selon la revendication 2, dans laquelle ladite phtalocyanine est une phtalocyanine de cuivre.

**4.** Carte optique selon la revendication 1, dans laquelle ladite région non enregistrable (25) contient au moins un composé représenté par la formule générale (I) montrée ci-dessous : Formule génrale (I) :

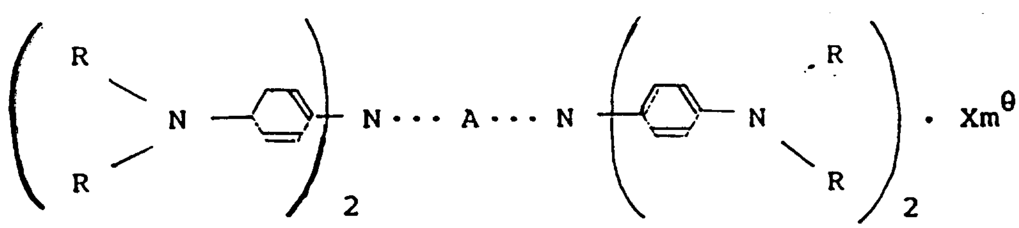

dans laquelle R représente un groupe alkyle inférieur, X$^{\theta}$ représente un anion ; m représente un entier égal à 0, 1 ou 2 ; et A représente

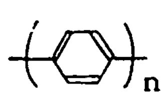

(n est égal à 1 ou 2) ou

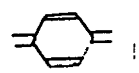

lorsque le m ci-dessus est égal à 2.

**5.** Carte optique selon la revendication 4, dans laquelle le composé représenté par la formule générale (I) est l'un des composés suivants :

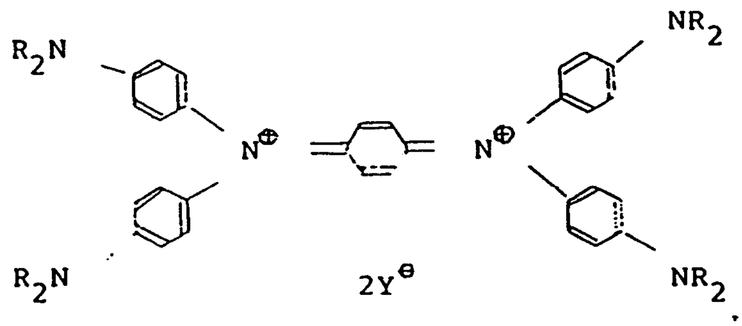

où R est n-$C_4H_9$ et $Y^{\ominus}$ est $C10_4^{\ominus}$.

**6.** Carte optique selon l'une quelconque des revendications 1, 2, 3, 4 et 5, dans laquelle la région non enregistrable (25) est formée par enduction.

**7.** Carte optique selon l'une quelconque des revendications précédentes, dans laquelle ladite région non enregistrable (25) comprend un film revêtu d'une matière non enregistrable.

**8.** Carte optique selon la revendication 7, dans laquelle ladite matière non enregistrable est une phtalocyanine.

**9.** Carte optique selon la revendication 7, dans laquelle ladite matière non enregistrable est le composé représenté par la formule générale (I) ayant la même définition que ci-dessus.

**10.** Carte optique selon l'une quelconque des revendications précédentes, dans laquelle ladite région non enregistrable (25) possède une réflectance de moins de ±25 % de la réflectance de ladite couche (22) d'enregistrement optique.

**11.** Carte optique selon l'une quelconque des revendications précédentes, dans laquelle ladite couche (22) d'enregistrement optique est contiguë à un substrat opaque (24) de carte avec interposition d'une couche adhésive (23).

**12.** Carte optique selon l'une quelconque des revendications précédentes, dans laquelle un substrat transparent (21) ayant des gorges (26) de pistes, une feuille adhésive thermoplastique (29, figure 6) dont une face est pourvue d'une couche (22) d'enregistrement optique, et un substrat opaque de carte sont superposés de manière que la couche (22) d'enregistrement optique puisse être en contact avec les gorges (26) de pistes, la superposition étant suivie d'une liaison par contact à chaud.

**13.** Carte optique selon l'une quelconque des revendications 1 à 11, dans laquelle un substrat transparent (21) ayant des gorges (26) de pistes, et un substrat opaque (24) de carte portant une feuille adhésive thermoplastique (29', figure 7) dont une face est pourvue d'une couche (22) d'enregistrement optique, sont superposés de manière que la couche (22) d'enregistrement optique puisse être en contact avec les gorges (26) de pistes, la superposition étant suivie d'une liaison par contact à chaud.

**14.** Carte optique selon la revendication 12 ou 13, dans laquelle ladite feuille adhésive thermoplastique (29 ou 29') a une épaisseur de 20 à 100 $\mu$m.

**15.** Carte optique selon la revendication 12 ou 13, dans laquelle ladite liaison par contact à chaud est effectuée à une température de 90 °C à 150 °C.

**16.** Carte optique selon l'une quelconque des revendications précédentes, dans laquelle ledit substrat transparent (21) porte une couche d'un revêtement protecteur dur.

**17.** Carte optique selon l'une quelconque des revendications précédentes, dans laquelle ledit substrat transparent (21) porte un film absorbant les ultraviolets.

**18.** Carte optique selon l'une quelconque des revendications précédentes, dans laquelle la couche (22, 28) d'enregistrement optique possède une extrémité (25) à laquelle la région non enregistrable (25) est située.

**19.** Carte optique selon l'une quelconque des revendications précédentes, dans laquelle la couche (22, 28) d'enregistrement optique comporte des extrémités opposées (25) à chacune desquelles une région non enregistrable (25) est située.

**20.** Carte optique selon l'une quelconque des revendications précédentes, dans laquelle des gorges (22) de suivi s'étendent à l'intérieur de la ou de chaque région non enregistrable (25).

**21.** Carte optique selon l'une quelconque des revendications précédentes, dans laquelle la région non enregistrable est agencée de façon à ne subir pratiquement aucune modification optique ou physique lors d'une exposition à une lumière d'extraction durant l'arrêt de la carte au moment où son sens de déplacement dans un lecteur de carte s'inverse.

**22.** Procédé pour reproduire des informations enregistrées dans une carte optique ayant un substrat (21) et une couche d'enregistrement (22), ledit procédé comprenant l'étape qui consiste à irradier de la lumière d'extraction sur ladite carte optique tout en effectuant un mouvement alternatif relatif entre ladite carte optique et ladite lumière d'extraction, caractérisé en ce qu'un arrêt du mouvement relatif de ladite carte optique et de la lumière d'extraction accompagnant l'inversion du sens du déplacement est effectué lorsque ladite lumière d'extraction est irradiée sur une région non enregistrable (25) de ladite carte qui possède sensiblement la même réflectance que ladite couche d'enregistrement (22).

**23.** Procédé selon la revendication 22, dans lequel ladite région non enregistrable (25) possède une réflectance inférieure à +25 % de la réflectance de ladite couche d'enregistrement (22).

**24.** Procédé selon la revendication 22, dans lequel ladite couche d'enregistrement (22) est liée à un support opaque (24) de carte par une couche d'adhésif (23).

**25.** Procédé selon l'une quelconque des revendications 22, 23 et 24, dans lequel ledit substrat (21) possède une couche de revêtement protecteur dur.

**26.** Procédé selon l'une quelconque des revendications 22 à 25, dans lequel ledit substrat (21) possède une couche de revêtement en film absorbant les ultraviolets.

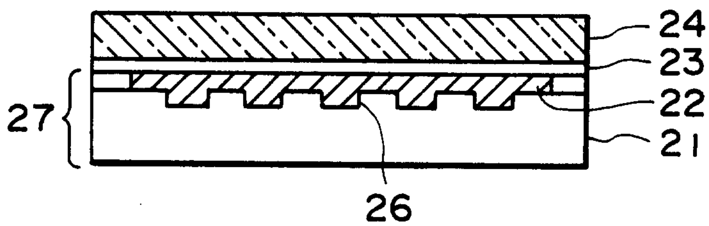


FIG. 1

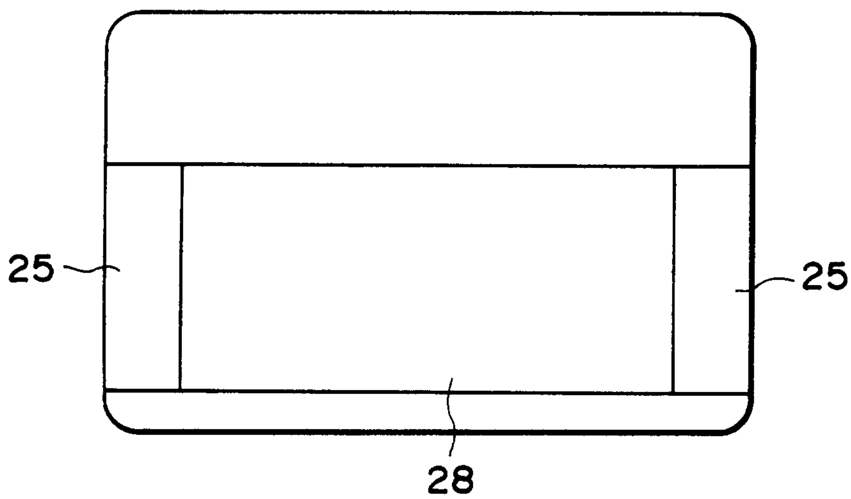


FIG. 2

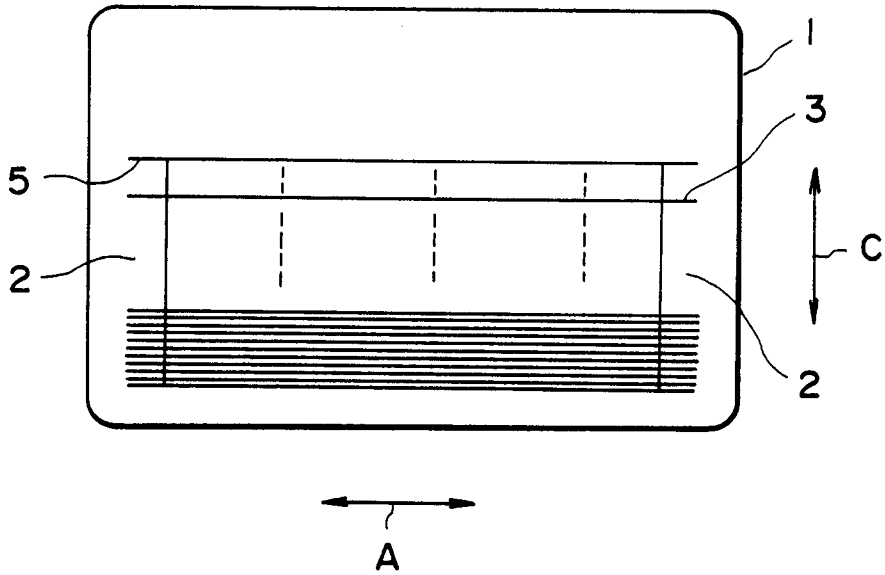


FIG. 3

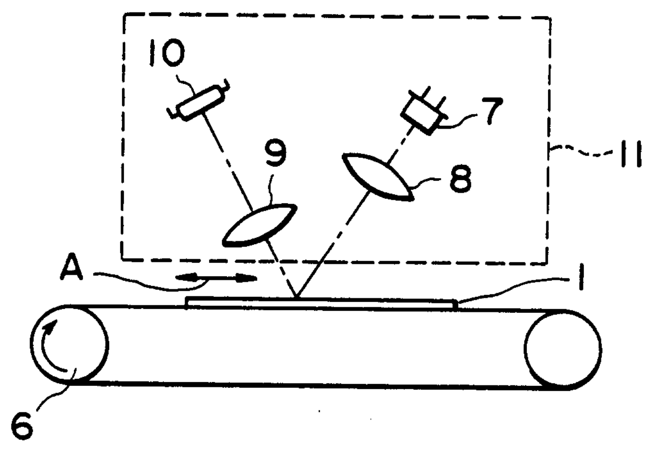


FIG. 4

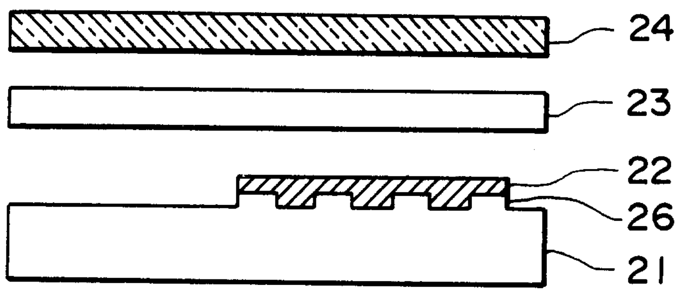


FIG. 5

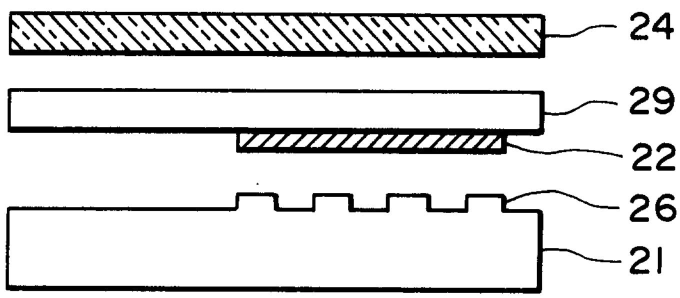


FIG. 6

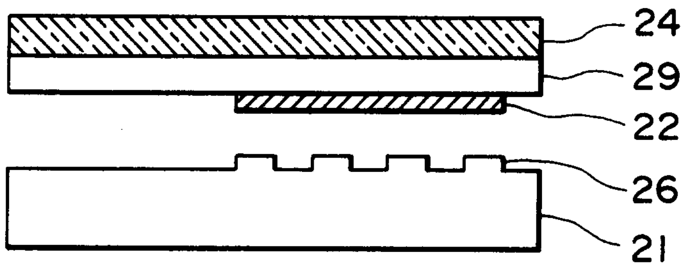


FIG. 7